# EUROPEAN PATENT SPECIFICATION

(11) **EP 4 502 039 B1**
(45) Date of publication and mention of the grant of the patent: **26.08.2026**
(21) Application number: 23775072.4
(22) Date of filing: 24.03.2023
(51) Int. Cl.: C08L 23/00, B32B 27/32, C08L 23/08, C08L 23/36, C08L 29/04, C08L 53/00

(54) **RESIN COMPOSITION AND MOLDED ARTICLE THEREOF, MULTILAYER STRUCTURE, AND ETHYLENE-VINYL ALCOHOL-BASED COPOLYMER RECOVERY AID**
HARZZUSAMMENSETZUNG UND FORMARTIKEL DARAUS, MEHRSCHICHTIGE STRUKTUR UND ETHYLENVINYLALKOHOL-COPOLYMER-RÜCKGEWINNUNGSHILFE
COMPOSITION DE RÉSINE ET ARTICLE MOULÉ ASSOCIÉ, STRUCTURE MULTICOUCHE ET AUXILIAIRE DE RÉCUPÉRATION DE COPOLYMÈRE À BASE D'ÉTHYLÈNE-ALCOOL VINYLIQUE

(30) Priority: 24.03.2022 JP 2022048752
(43) Date of publication of application: 05.02.2025
(73) Proprietor: Mitsubishi Chemical Corporation, Tokyo 100-8251 (JP)
(72) Inventor: TERAOKA Kota, Tokyo 100-8251 (JP); KIKUCHI Kohei, Tokyo 100-8251 (JP)
(74) Representative: Hoffmann Eitle
(86) International application number: PCT/JP2023/011721
(87) International publication number: WO 2023/182479

(56) References cited:
- EP-B1- 0 622 183
- WO-A1-2013/150357
- JP-A- 2001 079 997
- JP-A- 2004 331 708
- JP-A- 2006 151 365
- JP-A- 2011 105 046
- JP-A- 2014 122 320
- JP-A- 2019 116 554
- JP-A- 2021 088 684
- JP-A- 2021 116 380
- US-A1- 2020 199 361

## Description

### TECHNICAL FIELD

The present disclosure relates to a resin composition, a molded product by molding the resin composition, a multilayer structure, and an ethylene-vinyl alcohol copolymer recovery aid.

### BACKGROUND ART

In order to reduce the amount of plastic packaging waste, a recycling technology is known in which scraps generated during the process of manufacturing multilayer structures using non-polar resins such as polyolefin resins and barrier polar resins such as ethylene-vinyl alcohol copolymers (EVOHs) are collected, pulverized by crushing or other methods, melt kneaded to resin compositions, granulated/molded, and reused as regrind layers of multilayer structures. However, a problem with the resin compositions obtained in this way is that EVOHs and polyolefin resins therein are not easily compatible with each other. As a result, there is a problem of poor recyclability because EVOHs aggregate within the recycled resin layers and affect the quality of the multilayer structures after recycling.

In response to the above problems, JP-A-2021-88684describes a resin composition containing 0.1 to 20 parts by mass of an ethylene-vinyl alcohol copolymer (B) having an ethylene unit content of 15 to 60 mol% and a saponification degree of 85 mol% or more, and 0.1 to 10 parts by mass of a block copolymer (C) of an aromatic vinyl compound and an olefin per 100 parts by mass of a polyolefin (A), wherein the block copolymer (C) of the aromatic vinyl compound and the olefin has at least one group selected from the group consisting of a halogen, an epoxy group, a carboxyl group, and a group having a carboxylic anhydride structure, to improve recyclability.

### SUMMARY

### PROBLEMS TO BE SOLVED BY THE DISCLOSURE

Although recyclability is improved by using the resin composition described in JP-A-2021-88684 and US2020/199361 A1 in the above recycling technology, there is room for improvement in the transparency of the molded product obtained from such a resin composition.

The present disclosure has been made in view of the above problem and provides a resin composition which can improve the transparency of a molded product obtained by recycling scraps generated during the process of manufacturing multilayer structures using non-polar resins such as polyolefin and EVOH, a molded product obtained by molding said resin composition, a multilayer structure, and an EVOH recovery aid that enhances the recyclability of EVOH.

### MEANS FOR SOLVING THE PROBLEMS

As a result of intensive studies to solve the above problem, the present inventors have found that by adding an amine-modified resin to a resin composition containing a polyolefin resin and an EVOH, the transparency of a molded product obtained by molding said resin composition can be improved.

That is, the present disclosure provides the following [1] to [8].
[1] A resin composition comprising a polyolefin resin (A), an ethylene-vinyl alcohol copolymer (B), and an amine-modified resin (C), wherein the content of the amine-modified resin (C) is 0.1 to 20 parts by mass per 100 parts by mass of the polyolefin resin (A).
[2] The resin composition according to [1], wherein the content of the ethylene-vinyl alcohol copolymer (B) is 0.1 to 20 parts by mass per 100 parts by mass of the polyolefin resin (A).
[3] The resin composition according to [1], wherein the content of the ethylene-vinyl alcohol copolymer (B) and the content of the amine-modified resin (C) are 0.1 to 20 parts by mass and 0.1 to 20 parts by mass, respectively, per 100 parts by mass of the polyolefin resin (A).
[4] A resin composition according to any one of claims [1] to [3], wherein the amine-modified resin (C) is an amine-modified block copolymer of an aromatic vinyl compound and an olefin.
[5] The resin composition according to any one of [1] to [4], further comprising 0.1 to 20 parts by mass of an acid-modified polyolefin resin (D) per 100 parts by mass of the polyolefin resin (A).
[6] A molded product comprising the resin composition according to any one of [1] to [5].
[7] A multilayer structure having at least one layer containing the resin composition according to any one of [1] to [5].
[8] Use of an amine-modified resin (C) as an ethylene-vinyl alcohol copolymer recovery aid in the manufacture of the resin composition according to [1].

### EFFECTS OF THE DISCLOSURE

According to the resin composition of the present disclosure, it is possible to mold a highly transparent molded product without compromising the transparency of the resin composition obtained by recycling scraps generated during the process of manufacturing multilayer structures using polyolefin resin and EVOH (hereinafter, may be referred to as "recycled composition" or "regrind composition").

Note that the resin composition of the present disclosure is not limited to those containing polyolefin resin and EVOH as recycled materials, and can also be effectively applied to cases where either or both of these are virgin resins.

### EMBODIMENTS OF THE DISCLOSURE

Hereinafter, embodiments of the present disclosure will be described in detail. The present disclosure is not limited to the following description, but can be implemented in any variations without departing from the spirit and scope of the present disclosure.

Herein, when numerical values or physical property values are put before and after the term "to" to express a range, the term "to" is used in the sense that the range includes the values before and after the term "to".

When an expression "X or more" (X is any number) or "Y or less" (Y is any number) is used, it also encompasses the meaning "preferably more than X" or "preferably less than Y".

Furthermore, "X and/or Y (X and Y are any component)" means at least one of X and Y, and has three meanings of X alone, Y alone, and both X and Y.

Hereinafter, a monomer unit contained in a copolymer resin may simply be referred to as "unit". For example, a monomer unit based on ethylene may be referred to as "ethylene unit".

In the present disclosure, the melt flow rates (MFRs) and densities of resins are values measured as described below.

### <MFR>

MFRs are measured according to JIS K7210 under the conditions of 190°C (for an ethylene resin among polyolefin resins (A)), 210°C (for a propylene resin among polyolefin resins (A), and an EVOH (B)), or 230°C (for an amine-modified resin (C)), and a load of 2.16 kg.

### <Density>

The densities are measured by the water displacement method according to JIS K7112.

### [Resin composition]

The resin composition of the present disclosure contains a polyolefin resin (A), an ethylene-vinyl alcohol copolymer (B), and an amine-modified resin (C), wherein the content of the amine-modified resin (C) is 0.1 to 20 parts by mass per 100 parts by mass of the polyolefin resin (A).

### [Polyolefin resin (A)]

Examples of the polyolefin resin (A) include: polypropylene; propylene copolymer produced by copolymerizing propylene and α-olefin such as ethylene, 1-butene, 1-hexene, or 4-methyl-1-pentene; polyethylene such as low-density polyethylene, linear low-density polyethylene, medium-density polyethylene, or high-density polyethylene; ethylene copolymer produced by copolymerized ethylene and α-olefin such as 1-butene, 1-hexene, or 4-methyl-1-pentene; and poly(1-butene), poly(4-methyl-1-pentene).

The polyolefin resins (A) may be used alone, or two or more of them having different copolymerization component composition, physical properties, or the like may be used in a mixture.

In particular, as the polyolefin resin (A), propylene resins such as polypropylene and propylene copolymer, and ethylene resins such as polyethylene, high-density polyethylene and ethylene copolymer are preferred.

When the resin composition of the present disclosure contains an acid-modified polyolefin resin (D) described below, the polyolefin resin (A) refers to polyolefin resins other than the acid-modified polyolefin resin (D).

The melt flow rate (MFR: 190°C or 210°C, a load of 2.16 kg) of the polyolefin resin (A) is preferably 0.01 to 10 g/10 min. When the MFR of the polyolefin resin (A) is 0.01 g/10 min. or more, the difference in melt viscosities between the EVOH (B) and the polyolefin resin (A) does not become too large, and the dispersibility of the EVOH (B) in the resin composition tends to be better. On the other hand, when the MFR of the polyolefin resin (A) is 10 g/10 min. or less, the impact resistance of the resulting molded product tends to be better. The MFR of the polyolefin resin (A) is more preferably 5 g/10 min. or less, further preferably 3 g/10 min. or less, and particularly preferably 2 g/10 min. or less. When a mixture of a plurality of resins is used as the polyolefin resin (A), the MFR of the polyolefin resin (A) is the weighted mean of the MFR of each resin in the mixture by the mass ratio. When the EVOH (B), the amine-modified resin (C), and the acid-modified polyolefin resin (D), which are described below, are mixtures of a plurality of resins, their MFRs are determined in the same manner as for the polyolefin resin (A).

### [EVOH (B)]

The EVOH (B) can be obtained by saponifying an ethylene-vinyl ester copolymer. Vinyl acetate is a typical example of vinyl ester, and other fatty acid vinyl esters such as vinyl propionate and vinyl pivalate can also be used. Ethylene-vinyl ester copolymers can be manufactured by any known polymerization method, such as solution polymerization, suspension polymerization, or emulsion polymerization, and ethylene-vinyl ester copolymers can also be saponified by known methods.

The ethylene unit content of the EVOH (B) is measured based on ISO 14663, and is preferably 20 to 60 mol%. When the ethylene unit content is 20 mol% or more, the EVOH (B) in the resin composition has good gas barrier properties under high humidity conditions and good melt moldability. The ethylene unit content of the EVOH (B) is more preferably 23 mol% or more. When the ethylene unit content is 60 mol% or less, the barrier properties is excellent. The ethylene unit content of the EVOH (B) is more preferably 55 mol% or less, and further preferably 50 mol% or less.

The saponification degree of the vinyl ester units in the EVOH (B), which is measured based on JIS K6726 (in a solution in which EVOH is uniformly dissolved in a water/methanol solvent), is preferably 80 mol% or more, more preferably 98 mol% or more, and further preferably 99 mol% or more in terms of barrier properties, thermal stability, and moisture resistance.

The melt flow rate (MFR: 210°C, a load of 2.16 kg) of the EVOH (B) is preferably 0.1 to 100 g/10 min. When the MFR of the EVOH (B) is 100 g/10 min. or less, the difference in melt viscosities between the EVOH (B) and the polyolefin resin (A) does not become too large, resulting in a tendency for better dispersibility of the EVOH (B) in the resin composition and better thermal stability. The MFR of the EVOH (B) is more preferably 50 g/10 min. or less, and further preferably 30 g/10 min. or less. On the other hand, when the MFR of the EVOH (B) is 0.1 g/10 min. or more, the difference in viscosity with the polyolefin resin (A) does not become too large, and the dispersibility of the EVOH (B) in the resin composition tends to be better. The MFR of the EVOH (B) is more preferably 0.5 g/10 min. or more.

The EVOH (B) may contain polymerizable monomers other than ethylene and vinyl ester, copolymerized within a range that does not inhibit the effects of the present disclosure, generally within the range of 5 mol% or less. Examples of such polymerizable monomer include, for example: α-olefins such as propylene, isobutene, α-octene, α-dodecene, and α-octadecene; hydroxy group-containing α-olefins such as 3-buten-1-ol, 4-penten-1-ol, and 3-buten-1,2-diol, or hydroxy group-containing α-olefin derivatives such as esters or acylates thereof; hydroxymethylvinylidene diacetates such as 1,3-diacetoxy-2-methylenepropane, 1,3-dipropionyloxy-2-methylene propane, and 1,3-dibutyronyloxy-2-methylenepropane; unsaturated carboxylic acids or their salts, partial alkyl esters, complete alkyl esters, nitriles, amides or anhydrides; unsaturated sulfonic acids or salts thereof; vinylsilane compounds; vinyl chloride; and styrene. These may be used alone, or two or more of them may be used in combination.

Furthermore, a "post modified" EVOH such as urethanized, acetalizated, cyanoethylated, or oxyalkylenated EVOH can be also used as the EVOH (B).

EVOHs (B) may be used alone, or two or more of them having different vinyl ester types, ethylene unit content, physical properties, or the like may be used in a mixture.

### [Amine-modified resin (C)]

Examples of the amine-modified resin (C) include a graft-modified resin obtained by graft-modifying a resin with an amine compound, and a copolymer resin obtained by copolymerizing a monomer and an amine compound. These may be used alone, or two or more of them may be used in combination.

Resin types used as amine-modified resins (C) are not particularly limited, but include, for example: polypropylene; propylene copolymers produced by copolymerizing propylene and α-olefin such as ethylene, 1-butene, 1-hexene, or 4-methyl-1-pentene; polyethylene such as low-density polyethylene, linear low-density polyethylene, medium-density polyethylene, or high-density polyethylene; ethylene copolymers produced by copolymerized ethylene and α-olefin such as 1-butene, 1-hexene, or 4-methyl-1-pentene; and poly (1-butene), poly (4-methyl-1-pentene). In terms of compatibility with the polyolefin resin (A), ethylene-α-olefin copolymers and olefin-containing block copolymers are preferable, and block copolymers of aromatic vinyl compounds and olefins such as styrenic thermoplastic elastomers or hydrogenated styrenic thermoplastic elastomers (for example, partially hydrogenated or hydrogenated styrene-butadiene copolymers) are particularly preferable. Also, monomers to be copolymerized with amine compounds are not particularly limited, but include the monomers constituting the resin types described above.

The amine compounds used for modification are not limited, but specifically include alkylamines, alkenylamines, arylamines, arylalkylamines, cyclic alkylamines, and heterocyclic amines.

Examples of alkylamines include methylamine, ethylamine, propylamine, isopropylamine, n-butylamine, sec-butylamine, isobutylamine, tert-butylamine, and pentylamine. Examples of alkenylamines include dodecenylamines, octadecenylamines, and docosenylamines. Examples of arylamines include aniline, methylaniline, ethylaniline, p-isopropylaniline, and N-methylaniline. Examples of arylalkylamines include benzylamine, 1-phenylethylamine, and 2-phenylethylamine. Examples of cyclic alkylamines include cyclohexylamine and dicyclohexylamine. Examples of heterocyclic amines include thienylamine and quinolylamine. These amine compounds may be used alone, or two or more of them appropriately selected may be used in combination.

Using the amine-modified resin (C) enables the EVOH (B), which is a barrier polar resin, to be finely dispersed in the polyolefin resin (A), which is a non-polar resin. As a result, in the recycled composition in which the EVOH (B) is dispersed, the transparency of the polyolefin resin (A) can be improved, and good transparency of the film obtained by molding the recycled composition (hereinafter, may be referred to as "recycled film") can be kept.

The melt flow rate (MFR: 230°C, a load of 2.16 kg) of the amine-modified resin (C) is preferably 0.01 to 50 g/10 min., more preferably 0.1 to 20 g/10 min., particularly preferably 0.3 to 10 g/10 min. When the MFR of the amine-modified resin (C) is within the above range, the balance of viscosities between the amine-modified resin (C) and the polyolefin resin (A) becomes favorable. As a result, the dispersibility of the EVOH (B) tends to improve further.

The amine content in the amine-modified resin (C) is not particularly limited, but is preferably 0.001 to 20% by mass, more preferably 0.01 to 10% by mass, further preferably 0.1 to 5% by mass, particularly preferably 0.5 to 3% by mass of the amine-modified resin (C). When the amine content in the amine-modified resin (C) is within the above range, the dispersibility of the EVOH (B) in the resin composition of the present disclosure tends to be further improved, and the moldability tends to be improved.

The density of the amine-modified resin (C) is not particularly limited, but is preferably 0.855 to 0.955 g/cm³. When the density of the amine-modified resin (C) is within the above range, it tends to be able to maintain the appearance of the recycled film better and prevent the mechanical properties from deteriorating.

Commercially available products can also be used as the amine-modified resin (C) suitable for the present disclosure, such as "Tuftec (registered trademark) MP10" manufactured by Asahi Kasei Corporation.

### [Acid-modified polyolefin resin (D)]

The resin composition of the present disclosure may contain, as needed, the acid-modified polyolefin resin (D) which can be used in adhesive resin layers or the like of multilayer structures to be recycled. Examples of the acid-modified polyolefin resin (D) include graft-modified polyolefins obtained by graft-modifying polyolefins with acids, and olefin copolymers obtained by copolymerizing olefins and acids. These may be used alone, or two or more of them may be used in combination. In particular, modified polyolefins modified by unsaturated carboxylic acids and/or derivatives thereof are preferable, and in terms of more excellent compatibility with the polyolefin resin (A), the acid-modified polyolefin resin (D) is preferably obtained by acidmodifying the same type of polyolefin resin as the polyolefin resin (A). For example, when the polyolefin resin (A) is polypropylene, the acid-modified polyolefin resin (D) is preferably acid-modified polypropylene, and when the polyolefin resin (A) is polyethylene, the acid-modified polyolefin resin (D) is preferably acid-modified polyethylene.

Examples of unsaturated carboxylic acid used to modify the acid-modified polyolefin resin (D) include acrylic acids, methacrylic acids, fumaric acids, itaconic acids, and maleic acids, and examples of derivatives thereof include acid anhydrides such as maleic anhydride and itaconic anhydride. Among these, maleic anhydride is most suitable.

The melt flow rate (MFR: 190°C, a load of 2.16 kg) of the acid-modified polyolefin resin (D) is 0.01 g/10 min. or more and less than 15 g/10 min., preferably 0.5 to 10 g/10 min. When the MFR of the acid-modified polyolefin resin (D) is within the above range, the balance of viscosities between the acid-modified polyolefin resin (D) and the polyolefin resin (A) becomes favorable. As a result, the dispersibility of the EVOH (B) tends to improve further.

Further, the density of the acid-modified polyolefin resin (D) is preferably 0.855 to 0.955 g/cm³. When the density of the acid-modified polyolefin resin (D) is within the above range, it tends to be able to further prevent the recycled film's mechanical properties from deteriorating.

The amount of unsaturated carboxylic acid and/or derivatives thereof contained in the acid-modified polyolefin resin (D) is not particularly limited, but is preferably 0.001 to 20% by mass, more preferably 0.01 to 10% by mass, further preferably 0.1 to 5% by mass, particularly preferably 0.5 to 3% by mass of the acid-modified polyolefin resin (D). When the amount of unsaturated carboxylic acid and/or derivatives thereof in the acid-modified polyolefin resin (D) is within the above range, the dispersibility of the EVOH (B) in the resin composition of the present disclosure tends to improve further.

Acid-modified polyolefin resins (D) may be used alone, or two or more of them having different resin types used before modification, physical properties, or the like may be used in a mixture.

### [Proportion of composition]

The resin composition of the present disclosure contains the polyolefin resin (A), the EVOH (B), and the amine-modified resin (C), wherein the content of the amine-modified resin (C) is 0.1 to 20 parts by mass per 100 parts by mass of the polyolefin resin (A). The content proportion of the EVOH (B) is not particularly limited, but is preferably 0.1 to 20 parts by mass of the EVOH (B) per 100 parts by mass of the polyolefin resin (A).

When the content of the EVOH (B) is less than 0.1 parts by mass per 100 parts by mass of the polyolefin resin (A), the barrier properties due to the EVOH (B) cannot tend to be obtained sufficiently. On the other hand, when the content of the EVOH (B) exceeds 20 parts by mass, the impact resistance of the resulting molded product tends to decrease. The content of the EVOH (B) is more preferably 1 to 15 parts by mass per 100 parts by mass of the polyolefin resin (A), particularly preferably 5 to 10 parts by mass.

When the content of the amine-modified resin (C) is less than 0.1 parts by mass per 100 parts by mass of the polyolefin resin (A), the dispersibility of the EVOH (B) in the resin composition tends to decrease, resulting in reduced transparency of the obtained molded product. On the other hand, when the content of the amine-modified resin (C) exceeds 20 parts by mass, the transparency and the impact resistance of the resulting molded product tend to decrease. The content of the amine-modified resin (C) is more preferably 1 to 18 parts by mass per 100 parts by mass of the polyolefin resin (A), further preferably 3 to 15 parts by mass, particularly preferably 5 to 10 parts by mass.

When the resin composition of the present disclosure contains the acid-modified polyolefin resin (D), the content proportion thereof is not particularly limited, but is preferably 0.1 to 20 parts by mass of the acid-modified polyolefin resin (D) per 100 parts by mass of the polyolefin resin (A). The content of the acid-modified polyolefin resin (D) is more preferably 1 to 18 parts by mass per 100 parts by mass of the polyolefin resin (A), further preferably 3 to 15 parts by mass, particularly preferably 5 to 10 parts by mass.

The proportion of the polyolefin resin (A), the EVOH (B), and the amine-modified resin (C) in the resin composition of the present disclosure is not particularly limited, but is preferably 50% by mass or more, more preferably 70% by mass or more, further preferably 80% by mass or more, and particularly preferably 90% by mass or more, and may be 95% by mass or more, or 100% by mass.

### [Other component]

The resin composition of the present disclosure can contain resins other than the polyolefin resin (A), the EVOH (B), and the amine-modified resin (C), any additives, or the like (hereinafter, these are referred to as "other component") depending on various purposes, within a range not substantially impairing the effects of the present disclosure. The other components may be used alone, or two or more may be used in any combination and ratio.

Examples of additives include antioxidants, ultraviolet absorbers, plasticizers, lubricants, fillers, and antistatic agents. The total content of these additives in the resin composition of the present disclosure is typically 50% by mass or less, preferably 20% by mass or less, more preferably 10% by mass or less.

### [Method of manufacturing resin composition]

The methods of mixing each component to obtain the resin composition of the present disclosure are not particularly limited, but include: a method of dry-blending the polyolefin resin (A), the EVOH (B), the amine-modified resin (C), and optionally other components at one time, and melt kneading them; a method of melt kneading a portion of the polyolefin resin (A), the EVOH (B), the amine-modified resin (C), and optionally other components in advance, followed by blending other compounds thereinto and melt kneading them; a method of blending a multilayer structure containing a portion or all of the polyolefin resin (A), the EVOH (B), the amine-modified resin (C), and optionally other components, and other compounds, and melt kneading them.

As a method of manufacturing the resin composition of the present disclosure, a method of melt kneading a recovered multilayer structure comprising the polyolefin resin (A) layer and the EVOH (B) layer with an EVOH recovery aid containing the amine-modified resin (C) is preferred. Here, the recovered multilayer structure refers to recovered scrap such as burrs or rejects generated during the manufacture of molded products obtained from said multilayer structure. In the present disclosure, additives blended during melt kneading of such recovered multilayer structures are called EVOH recovery aids, and EVOH recovery aids containing the amine-modified resin (C) are used.

Examples of a specific method for melt kneading include uniformly mixing each component at a predetermined blending ratio using a Henschel mixer, ribbon blender, V-type blender, etc., and then kneading them using a multi-screw kneading extruder such as the twin-screw kneading extruder TEX 25 from The Japan Steel Works, Ltd.

The temperature for melt kneading each component is typically 100 to 300°C, preferably 120 to 280°C, and more preferably 150 to 250°C.

### [Molded product]

The molded product of the present disclosure is obtained by molding the resin composition of the present disclosure.

Examples of shapes of the molded products of the present disclosure include films, sheets, tapes, cups, trays, tubes, bottles, pipes, filaments, profile extrusion products, and various irregularly shaped molded articles.

The molding method for the resin composition of the present disclosure is not particularly limited, and any molding method applicable to general resin compositions may be applied.

For example, extrusion molding, blow molding, injection molding, thermoforming, or the like may be applied.

Furthermore, in molding, a heat stretching process is often applied to improve the physical properties of the molded product or to mold it into any desired container shape. The heat stretching process herein means that a thermally uniformly heated molded article in the shape of a film, a sheet or a parison is uniformly molded into the shape of a cup, a tray, a tube, a bottle, a film using a chuck, a plug, vacuum force, compressed-air force, blowing, or the like. Examples of the stretching methods include roll stretching, tenter stretching, tubular stretching, stretching blow molding, vacuum molding, pressure molding, and vacuum pressure molding. The stretching may be either uniaxial or biaxial, and in case of biaxial stretching, either simultaneous biaxial stretching method or sequential biaxial stretching method may be used. The temperature for stretching is typically 60 to 170°C, further preferably 80 to 160°C.

In addition to the molded product described above, the resin composition of the present disclosure is generally used as at least one layer (regrind layer) of a multilayer structure. The multilayer structure including the regrind layer (also simply referred to as "multilayer structure") will be described below.

### <<Multilayer structure including regrind layer>>

The multilayer structure including a regrind layer needs only to have at least one layer containing the resin composition of the present disclosure (hereinafter, also referred to as "regrind layer" or "Reg layer") in its laminate, and generally may include, in addition to regrind layers, a polyolefin resin layer (hereinafter, also referred to as "PO layer"), an EVOH layer, an acid-modified polyolefin layer (hereinafter, also referred to as "acid-modified PO layer"), or the like.

Specific examples of the layer composition of the multilayer structure including the Reg layer include PO layer/Reg layer/acid-modified PO layer/EVOH layer, PO layer/Reg layer/acid-modified PO layer/EVOH layer/acid-modified PO layer/PO layer, and PO layer/Reg layer/acid-modified PO layer/EVOH layer/acid-modified PO layer/Reg layer/PO layer, as well as Reg layer/EVOH layer, Reg layer/acid-modified PO layer/EVOH layer, Reg layer/acid-modified PO layer/EVOH layer/acid-modified PO layer/EVOH layer, Reg layer/acid-modified PO layer/EVOH layer/acid-modified PO layer/PO layer, Reg layer/acid-modified PO layer/EVOH layer/acid-modified PO layer/Reg layer/PO layer, and PO layer/acid-modified PO layer/EVOH layer/Reg layer/EVOH layer/acid-modified PO layer/PO layer, and the like.

Although the thickness of each layer of the multilayer structure including the regrind layer cannot be generalized depending on the layer composition, the type of polyolefin resin, the application, the shape of the container, the required physical properties, or the like, the thickness of regrind layer is typically 5 to 5000 µm, and preferably 30 to 1000 µm. The thickness of the EVOH layer is typically 5 to 500 µm, and preferably 10 to 200 µm. The thickness of the polyolefin resin layer is typically 5 to 5000 µm, and preferably 30 to 1000 µm. The thickness of the acid-modified PO layer is typically 5 to 400 µm, and preferably 10 to 150 µm.

The thickness ratio of the regrind layer/the polyolefin resin layer is typically 1/5 to 10/1, and preferably 1/2 to 5/1. The thickness ratio of the regrind layer/the EVOH layer is typically 1/1 to 100/1, and preferably 5/1 to 20/1.

### <Method of manufacture of multilayer structure including regrind layer>

Such a multilayer structure including a regrind layer can be manufactured, for example, by molding using the same type of resin as the multilayer structure to be recovered and the same type of method. In this case, the molding method for the resin composition of the present disclosure is not particularly limited, and any molding method applicable to general resin compositions may be applied. Specifically, it can be manufactured using the polyolefin resin used in the polyolefin resin layer and the EVOH used in the EVOH layer exemplified in the laminate to be recovered, by a laminating method such as extrusion molding, blow molding, injection molding, or thermoforming, especially co-extrusion molding or co-injection molding, more especially co-extrusion molding.

The multilayer structures thus obtained are useful as packaging material containers for various products such as general foods, mayonnaise, dressings and other condiments, miso and other fermented foods, salad oil, other oils and fats, beverages, cosmetics, and pharmaceuticals, regardless of whether they are recycled or re-recycled products.

### <Recovery aid>

When a method of manufacturing the resin composition of the present disclosure includes a step of recovering a multilayer structure comprising the polyolefin resin (A) layer and the EVOH (B) layer, the amine-modified resin (C) serves as an EVOH recovery aid, as described above. The EVOH recovery aid of the present disclosure contains the amine-modified resin (C). The content of the amine-modified resin (C) in the EVOH recovery aid is not particularly limited, but is preferably 1 to 100% by mass. The amine-modified resin (C) content is more preferably 10% by mass or more, further preferably 30% by mass or more, more preferably 50% by mass or more, and particularly preferably 70% by mass or more, and may be 80% by mass or more, 90% by mass or more, 95% by mass or more, or 100% by mass.

The improvement rate of external haze of the resin composition of the present disclosure is preferably 7.1% or higher, more preferably 8% or higher, further preferably 10% or higher, and particularly preferably 14% or higher compared to that which does not contain the amine-modified resin (C), which is an EVOH recovery aid. While a higher external haze improvement rate is preferable, the upper limit is typically 70%. The improvement rate of external haze can be measured, for example, using the method described in the Examples below.

### EXAMPLES

Hereinafter, the specific aspects of the present disclosure will be described in more detail using the examples. The present disclosure is not limited to the following examples without departing from the spirit and scope of the present disclosure. Values of various manufacturing conditions or evaluation results of the following examples have a meaning as preferred values of the upper or lower limits in the embodiments of the present disclosure, and the preferred range may be a range defined by a combination of the above-described upper or lower values and values in the following Examples or a combination of values in Examples.

The materials used in the following Examples, Comparative Examples, and Reference Examples are as follows.

### [Regrind composition material]

### <Polyolefin resin>

- Polyethylene (A1): "NOVATEC (registered trademark) UF230" manufactured by Japan Polyethylene Corporation, MFR (190°C, a load of 2.16 kg): 1 g/10 min., density: 0.921 g/cm³
- Polyethylene (A2): "NOVATEC (registered trademark) UF641" manufactured by Japan Polyethylene Corporation, MFR (190°C, a load of 2.16 kg): 2.1 g/10 min., density: 0.927 g/cm³

### <EVOH>

- EVOH (B): ethylene content of 32 mol%, saponification degree of 99.9 mol%, MFR (210°C, a load of 2.16 kg): 3.8 g/10 min., density: 1.19 g/cm³

### <Amine-modified resin (EVOH recovery aid)>

- Amine-modified hydrogenated styrenic thermoplastic elastomer (C): "Tuftec (registered trademark) MP10" manufactured by Asahi Kasei Corporation, MFR (230°C, a load of 2.16 kg): 4.0 g/10 min., density: 0.91 g/cm³

### <Acid-modified polyolefin resin>

- Acid-modified polyolefin resin (D): "MODIC (registered trademark) M512" manufactured by Mitsubishi Chemical Corporation, MFR (190°C, a load of 2.16 kg): 1.0 g/10 min., density: 0.900 g/cm³

### <Example 1>

### [Manufacture of multilayer structure]

By supplying (A), (B) and (D) to a multilayer co-extrusion sheet forming apparatus and performing multilayer co-extrusion molding under the following conditions, a multilayer structure (sheet) having a 3-resin 5-layer structure with the first (A) layer/(D) layer/(B) layer/(D) layer/second (A) layer was obtained. The thickness of each layer of the multilayer structure (µm) was 450/60/180/60/450.

### (Multilayer co-extrusion molding conditions)

- (B) layer extruder: 40 mm diameter single-screw extruder (barrel temperature: 220°C)
- First (A) layer extruder: 40 mm diameter single-screw extruder (barrel temperature: 225°C)
- Second (A) layer extruder: 40 mm diameter single-screw extruder (barrel temperature: 225°C)
- (D) layer extruder: 32 mm diameter single-screw extruder (barrel temperature: 220°C)
- Die: 5-resin 7-layer feed block type T-die (die temperature: 220°C)
- Take-up speed: 1.6 m/min.
- Roll temperature: 50°C

### [Preparation of monolayer film of recycled composition]

The obtained multilayer sheet was crushed and melt kneaded using a twin-screw extruder (manufactured by The Japan Steel Works, Ltd., TEX30α, D = 25 mm dimeter, L/D = 56), at a set temperature 210°C, screw speed of 300 rpm, extrusion rate of 30 kg/h, and then strand-cut to obtain a pelletized recycled composition. The recycled composition contained 71% of (A), and 19 parts of (B) and 14 parts of (D) per 100 parts of (A).

To 100 parts of the resulting recycled composition, 5 parts of the amine-modified resin (C) (equivalent to 6.25 parts per 100 parts of (A)) were added as an EVOH recovery aid and mixed by dry-blending, and using a monolayer T die film molding machine (manufactured by GSI Creos Corporation, 40 mm dimeter, lip gap: 0.3 mm) at a set temperature 220°C and a screw speed of 60 rpm, a film with a thickness of 0.1 mm was prepared.

### <Examples 2 to 4>

A film was prepared in the same manner as in Example 1, except that polyethylene (A2) was used instead of polyethylene (A1), the content of the EVOH (B) and the EVOH recovery aid (C) was changed as described in Table 2, and the thickness of each layer of the multilayer structure (µm) was changed to 521/31/95/31/521.

### <Comparative Example 1>

A film was prepared in the same manner as in Example 1, except that (C'1) maleic anhydride modified hydrogenated styrenic thermoplastic elastomer ("Tuftec M1943" manufactured by Asahi Kasei Corporation, MFR (230°C, a load of 2.16 kg): 8.0 g/10 min., density: 0.90 g/cm³) was used instead of the amine-modified resin (C).

### <Comparative Example 2>

A film was prepared in the same manner as in Example 1, except that (C'2) maleic anhydride modified hydrogenated styrenic thermoplastic elastomer ("Tuftec H1041" manufactured by Asahi Kasei Corporation, MFR (230°C, a load of 2.16 kg): 5.0 g/10 min., density: 0.91 g/cm³) was used instead of the amine-modified resin (C).

### <Comparative Examples 3 to 4>

A film was prepared in the same manner as in Example 2, except that the content of EVOH recovery aid (C) was changed as described in Table 2.

### <Reference Example 1>

A film was prepared in the same manner as in Example 1, except that the amine-modified resin (C) was not used.

### <Reference Example 2>

A film was prepared in the same manner as in Example 2, except that the amine-modified resin (C) was not used.

The internal haze and external haze of the films of Example 1, Comparative Examples 1 to 2, and Reference Example 1 were measured by the following method. Additionally, the improvement rate of internal haze and external haze for Example 1 and Comparative Examples 1 to 2 relative to Reference Example 1 were determined. The results are shown in Table 1.

The external haze of the films of Examples 2 to 4, Comparative Examples 3 to 4, and Reference Example 2 were measured by the following method. Additionally, the improvement rate of external haze for Examples 2 to 4 and Comparative Examples 3 to 4 relative to Reference Example 2 were determined. The results are shown in Table 2.

### [Evaluation method]

### (Internal haze and external haze)

Using the films with a thickness of 0.1 mm prepared as described above, the external and internal hazes were measured using a HAZE meter with n=3, and the average values were calculated. Internal haze is an indicator used to evaluate the dispersibility of EVOH in a resin composition, and the smaller internal haze value, the more finely dispersed the EVOH is and the better the appearance. External haze is an indicator used to evaluate the surface roughness of a film, the smaller external haze value, the better the appearance of the film.

**Table 1**

| | Composition | | | | Evaluation | | | |
|---|---|---|---|---|---|---|---|---|
| | PO(A) | EVOH(B) | EVOH Recovery Aid | | Internal Haze (%) | External Haze (%) | Internal Haze Improvement Rate (%) | External Haze Improvement Rate (%) |
| | | Content per 100 Parts of (A) (Parts) | Type | Content per 100 Parts of (A) (Parts) | | | | |
| Example 1 | A1 | 19 | C | 6.25 | 11 | 27.9 | 20 | 21.63 |
| Comparative Example 1 | A1 | 19 | C'1 | 6.25 | 13.3 | 33.1 | 4 | 7.02 |
| Comparative Example 2 | A1 | 19 | C'2 | 6.25 | 16.2 | 52.2 | -17 | -46.63 |
| Reference Example 1 | A1 | 19 | - | 0 | 13.8 | 35.6 | - | - |

**Table 2**

| | Composition | | | | Evaluation | |
|---|---|---|---|---|---|---|
| | PO(A) | EVOH(B) | EVOH Recovery Aid | | External Haze (%) | External Haze Improvement Rate (%) |
| | | Content per 100 Parts of (A) (Parts) | Type | Content per 100 Parts of (A) (Parts) | | |
| Example 2 | A2 | 12 | C | 1.18 | 6.47 | 7.17 |
| Example 3 | A2 | 12 | C | 5.88 | 5.91 | 15.21 |
| Example 4 | A2 | 12 | C | 17.65 | 5.74 | 17.65 |
| Comparative Example 3 | A2 | 12 | C | 0.06 | 7.14 | -2.44 |
| Comparative Example 4 | A2 | 12 | C | 23.53 | 6.53 | 6.31 |
| Reference Example 2 | A2 | 12 | - | 0 | 6.97 | - |

From Example 1, it can be seen that using an amine-modified resin as an EVOH recovery aid results in superior internal and external hazes and transparency of the molded product, compared to using no recovery aid or using an unmodified resin or another modified resin as a recovery aid.

Furthermore, from Examples 2 to 4 and Comparative Examples 3 to 4, it can be seen that using amine-modified resin in the amount specified in the present disclosure results in superior transparency of the molded product compared to using amine-modified resin in an amount outside the specified range in the present disclosure.

When recycling an olefin resin composition containing EVOH, the generally low compatibility between EVOH and the olefin resin composition results in poor dispersibility of EVOH in the olefin resin and a molded product with poor transparency. In Example 1, it is thought that the dispersibility of EVOH in the olefin resin was improved by the amine-modified resin forming excellent hydrogen bonds with the vinyl alcohol groups in the EVOH, resulting in improved transparency of the molded product.

While specific forms of the embodiment of the present disclosure have been shown in the above Examples, the Examples are merely illustrative, and should not be construed as limiting. It is contemplated that various modifications apparent to those skilled in the art could be made within the scope of the present disclosure.

## Claims

1. A resin composition, comprising:
a polyolefin resin (A),
an ethylene-vinyl alcohol copolymer (B), and
an amine-modified resin (C),
wherein the content of the amine-modified resin (C) is 0.1 to 20 parts by mass per 100 parts by mass of the polyolefin resin (A).

2. The resin composition according to claim 1, wherein the content of the ethylene-vinyl alcohol copolymer (B) is 0.1 to 20 parts by mass per 100 parts by mass of the polyolefin resin (A).

3. The resin composition according to claim 1, wherein the content of the ethylene-vinyl alcohol copolymer (B) and the content of the amine-modified resin (C) are 0.1 to 20 parts by mass and 0.1 to 20 parts by mass, respectively, per 100 parts by mass of the polyolefin resin (A).

4. The resin composition according to any one of claims 1 to 3, wherein the amine-modified resin (C) is an amine-modified block copolymer of an aromatic vinyl compound and an olefin.

5. The resin composition according to any one of claims 1 to 4, further comprising 0.1 to 20 parts by mass of an acid-modified polyolefin resin (D) per 100 parts by mass of the polyolefin resin (A).

6. A molded product comprising:
the resin composition according to any one of claims 1 to 5.

7. A multilayer structure comprising:
at least one layer comprising the resin composition according to any one of claims 1 to 5.

8. Use of an amine-modified resin (C) as an ethylene-vinyl alcohol copolymer recovery aid in the manufacture of the resin composition according to claim 1.

## Patentansprüche

1. Harzzusammensetzung, umfassend:
ein Polyolefinharz (A),
ein Ethylen-Vinylalkohol-Copolymer (B) und
ein aminmodifiziertes Harz (C),
wobei der Gehalt des aminmodifizierten Harzes (C) 0,1 bis 20 Masseteile pro 100 Masseteile des Polyolefinharzes (A) beträgt.

2. Harzzusammensetzung gemäß Anspruch 1, wobei der Gehalt des Ethylen-Vinylalkohol-Copolymers (B) 0,1 bis 20 Masseteile pro 100 Masseteile des Polyolefinharzes (A) beträgt.

3. Harzzusammensetzung gemäß Anspruch 1, wobei der Gehalt des Ethylen-Vinylalkohol-Copolymers (B) und der Gehalt des aminmodifizierten Harzes (C) 0,1 bis 20 Masseteile bzw. 0,1 bis 20 Masseteile, pro 100 Masseteile des Polyolefinharzes (A) betragen.

4. Harzzusammensetzung gemäß einem der Ansprüche 1 bis 3, wobei das aminmodifizierte Harz (C) ein aminmodifiziertes Blockcopolymer einer aromatischen Vinylverbindung und eines Olefins ist.

5. Harzzusammensetzung gemäß einem der Ansprüche 1 bis 4, ferner umfassend 0,1 bis 20 Masseteile eines säuremodifizierten Polyolefinharzes (D) pro 100 Masseteile des Polyolefinharzes (A).

6. Formprodukt, umfassend:
die Harzzusammensetzung gemäß einem der Ansprüche 1 bis 5.

7. Mehrschichtstruktur, umfassend:
mindestens eines Schicht, umfassend die Harzzusammensetzung gemäß einem der Ansprüche 1 bis 5.

8. Verwendung eines aminmodifizierten Harzes (C) als ein Ethylen-Vinylalkohol-Copolymer-Rückgewinnungshilfsmittel bei der Herstellung der Harzzusammensetzung gemäß Anspruch 1.

## Revendications

1. Composition de résine, comprenant :
une résine de polyoléfine (A),
un copolymère (B) éthylène-alcool vinylique, et
une résine modifiée à l'amine (C),
dans laquelle la teneur en résine modifiée à l'amine (C) est comprise entre 0,1 partie en masse et 20 parties en masse pour 100 parties en masse de la résine de polyoléfine (A).

2. Composition de résine selon la revendication 1, dans laquelle la teneur en copolymère (B) éthylène-alcool vinylique est comprise entre 0,1 partie en masse et 20 parties en masse pour 100 parties en masse de la résine de polyoléfine (A).

3. Composition de résine selon la revendication 1, dans laquelle la teneur en copolymère (B) éthylène-alcool vinylique et la teneur en résine modifiée à l'amine (C) sont comprises entre 0,1 partie en masse et 20 parties en masse et entre 0,1 partie en masse et 20 parties en masse, respectivement, pour 100 parties en masse de la résine de polyoléfine (A).

4. Composition de résine selon l'une quelconque des revendications 1 à 3, dans laquelle la résine modifiée à l'amine (C) est un copolymère séquencé modifié à l'amine d'un composé vinylaromatique et d'une oléfine.

5. Composition de résine selon l'une quelconque des revendications 1 à 4, comprenant en outre de 0,1 partie en masse à 20 parties en masse d'une résine de polyoléfine modifiée à l'acide (D) pour 100 parties en masse de la résine de polyoléfine (A).

6. Produit moulé comprenant :
la composition de résine selon l'une quelconque des revendications 1 à 5.

7. Structure multicouche comprenant :
au moins une couche comprenant la composition de résine selon l'une quelconque des revendications 1 à 5.

8. Utilisation d'une résine modifiée à l'amine (C) en tant qu'auxiliaire de récupération de copolymère éthylène-alcool vinylique dans la fabrication de la composition de résine selon la revendication 1.
